# EUROPEAN PATENT SPECIFICATION

(11) **EP 1 516 000 B1**
(45) Date of publication and mention of the grant of the patent: **23.02.2011**
(21) Application number: 02754751.2
(22) Date of filing: 25.06.2002
(51) Int. Cl.: C08F 210/16, C08F 210/06, C08F 297/08, C08L 23/10, C08F 2/00, C08F 2/14, C08F 2/34

(54) **POLYOLEFIN WITH IMPROVED SCRATCH RESISTANCE AND PROCESS FOR PRODUCING THE SAME**
POLYOLEFIN MIT VERBESSERTER KRATZFESTIGKEIT UND VERFAHREN ZU SEINER HERSTELUNG
POLYOLEFINE PRESENTANT UNE MEILLEURE RESISTANCE AUX ERAFLURES ET SON PROCEDE DE FABRICATION

(43) Date of publication of application: 23.03.2005
(73) Proprietor: Borealis Technology Oy, 06101 Porvoo (FI)
(72) Inventor: HAGEN, Erling, N-3960 Stathelle (NO); TORGERSEN, Ulf, A-4072 Alkoven (AT); ROHACZEK, Gerald, A-7083 Purbach (AT); IVELAND, Asbjorn, N-3960 Stathelle (NO)
(74) Representative: Viering, Jentschura & Partner
(86) International application number: PCT/EP2002/007010
(87) International publication number: WO 2004/000899

(56) References cited:
- EP-A- 0 517 183
- EP-A- 0 887 380
- WO-A-95/22565
- WO-A-96/18662
- WO-A-98/58976
- WO-A-98/59002

## Description

The present invention relates to a polyolefin with improved surface toughness in terms of scratch resistance, and to a process for producing same. More specifically, the invention relates to a polyolefin on the basis of a polypropylene matrix material including bimodal rubber compositions as well as a process for producing said polyolefin and the use as base in a mineral filled compound.

Various techniques for increasing the scratch resistance of polyolefin materials are previously known, i.e. addition of silica materials. Thus, JP 1318051 (Toray Silicone KK) discloses polyolefins which for this purpose have been modified with a filler on silica basis. Said filler may have been surface treated with silane type compounds.

JP 1104637 (Showa Denko KK) discloses materials on a polypropylene basis to which silica/alumina spheroids and a polypropylene material functionalised with carboxylic acid or carboxylic anhydride have been added.

US 5484824 discloses a polypropylene composition containing ethylene-propylene rubber which can be used for manufacturing exterior parts for automobiles.

US 5308908 refers to a polypropylene resin composition comprising a specific mixture of ethylene/propylene and other α-olefin copolymers for manufacturing car bumpers.

EP 0517183 discloses a process for the gas-phase polymerization of olefins in one or more reactors having a fluidized bed or mechanically agitated bed, wherein a polyethylene polymer is mainly produced.

EP 0887380 refers to a process for preparing propylene based copolymers having a high copolymer content, wherein at least one slurry reactor and at least one gas phase reactor is used. In the loop reactor ethylene is used.

A more recent application EP-0804503 of the present applicant discloses that when a functionalised polypropylene material and an amorphous, fatty acid amide-modified silica gel are incorporated into certain polyolefin materials having a mineral content, the scratch resistance of the material can substantially improved, with retention of the impact strength and the thermal shape stability (HDTA) of the material.

Though said materials show good scratch resistance properties these materials are based upon rather expensive filler systems i.e. surface treated fillers, resulting in difficulty to penetrate the market due to the elevated price.

Conventional matrices like rubber modified R-TPO's and high crystalline heterophasic copolymers are showing limited scratch resistance without using any modifier package, e.g. HDPE, slip agents, high pigmentation, special talc quality) thus limiting the possibilities of using the materials in different applications, e.g. car interior, electrical appliances, where scratch resistance is an important property.

Accordingly, there is the need for polymer materials which show superior scratch resistance properties at reasonable costs.

On the basis of this situation, the inventors of the present invention have carried out intensive studies and found out that, amongst others, the following factors have an important positive effect on scratch resistance properties:
- two rubber parts with highly differentiated Mw (IV) should be present in a polypropylene matrix, and
- the low IV rubber must be ethylene rich.

By using this principle, the ethylene rich rubber particles are brought more easily towards the surface layer in any moulded article. The ethylene rich rubber, including partly crystalline polyethylene, are more evenly distributed near the surface compared to propylene rich rubber and by that giving more stiffness/hardness to the surface which improves the resistance to scratch damage.

A subsequent compounding step, if necessary, can be done without expensive treated fillers or excessive amounts of expensive elastomers and still give high scratch resistance properties combined with the required mechanical properties.

Furthermore, it was found out that the addition of an slip agent, e.g. erucamide, further improves the scratch resistance properties.

In a first aspect, the present invention is therefore directed to a process for the preparation of a polypropylene polymer composition with bimodal rubber, said process comprising the steps of:
i) feeding propylene to a at least one slurry reactor and producing a polypropylene polymer matrix in the presence of a polymerisation catalyst in said at least one slurry reactor,
ii) transferring the slurry reactor product into a gas phase reactor (GPR),
iii) feeding a first mixture of ethylene and propylene to said first gas phase reactor and producing a first ethylene/propylene-copolymer in the polymer matrix in the presence of a polymerisation catalyst in said first gas phase reactor,
iv) transferring the first gas phase reactor product into a second gas phase reactor, and
v) feeding a second mixture of ethylene and propylene to said second gas phase reactor and producing a second ethylene/propylene-copolymer in the polymer matrix in the presence of a polymerisation catalyst in said second gas phase reactor,
vi) recovering the polymer product produced in step v) for further processing,
said first and second ethylene/propylene mixtures having different composition ratios, wherein said first ethylene/propylene-copolymer has a higher molecular weight than said second ethylene/propylene-copolymer, and whereby the polymerisation conditions in the gas phase reactors are such that in one GPR reactor A, the gas phase polymerisation step is carried out by adding propylene and ethylene monomers where the resulting amount of C₂ in the EPR formed in gas phase reactor A is in the range from 39 - 74 mol% and that in the other GPR reactor B, the gas phase polymerisation step is carried out by adding propylene and ethylene monomers where the resulting amount of C₂ in the EPR formed in gas phase reactor B is in the range from 77 - 99,9 mol.

In a preferred embodiment, the invention is directed to a process wherein the composition ratios of said first and second ethylene/propylene mixtures are adjusted so that in the first gas phase reactor, a propylene rich EPR rubber is produced in the propylene polymer matrix, and in the second gas phase reactor, a ethylene rich EPR rubber is produced in the propylene polymer matrix.

In a further preferred embodiment, the propylene-rich EPR rubber has a higher molecular weight than said ethylene-rich EPR rubber.

The initial polypropylene polymer matrix will preferably be produced in a slurry reactor rather than in a gas phase reactor. The product of the slurry phase reaction is then preferably flashed to remove unreacted monomers and H₂ and transferred into a gas phase reactor where further reaction takes place with the formation of ethylene propylene rubber.

The polypropylene polymer matrix of the invention is produced preferably in at least one slurry reactor.

Suitable preparation methods will be readily determined by the person skilled in the art and include but are not limited to:
A. producing the polypropylene polymer matrix in a at least one slurry reactor, then feeding the flashed slurry reactor product into a gas phase reactor, and producing in a first gas phase reactor (GPR) the first ethylene/propylene-copolymer in the matrix, feeding the flashed first gas phase reactor product into a second gas phase reactor, and producing in the second gas phase reactor (GPR) the second ethylene/propylene-copolymer in the matrix.

Also described herein is a method of producing the polypropylene polymer matrix in a at least one slurry reactor, as described in the first step of A, then feeding the flashed slurry reactor product into a gas phase reactor and then producing in said gas phase reactor (GPR) the first ethylene/propylene-copolymer in the matrix, flashing the gas phase reactor product and reintroducing the GPR product into the gas phase reactor, and producing the second ethylene/propylene-copolymer in the matrix in the gas phase reactor (GPR).

The monomer feeds into the various reactors may be adapted to produce a polymer with the desired properties and the amounts of monomers will be readily determined by the person after contemplating the present invention.

Preferably, a loop reactor is used as said slurry reactor although other reactor types such as a tank reactor could also be employed. According to another embodiment, said slurry phase is carried out in two slurry reactors, preferably but not necessarily in two loop reactors. In this way the supply/feeding speed to the GPR can be easily controlled. When continuing the polymerisation in the gas phase reactor or reactors, sufficient supply of the matrix propylene polymer can be established.

In the slurry reactor, propylene preferably acts not only as a monomer for polymerisation but also as a diluent. The slurry step, which preferably occurs in a loop reactor, is carried out by feeding into at least one slurry polymerisation step a reaction mixture containing 50-99,9 wt % of propylene up to 1 wt % hydrogen and a catalyst system whilst maintaining olefin polymerisation at a temperature below 75°C. Where two or more slurry reactors are used, these are preferably loop reactors and are fed by the same mixture as for a single slurry reactor.

Hydrogen may be added into either of the slurry phase or gas phase reactors to control the molecular weight of the respective polymer produced. The use of hydrogen in olefin polymerisation is conventional and will be readily applied by the person skilled in the art.

In the first gas phase reactor, the first gas phase polymerisation step is carried out by adding propylene and ethylene monomers where the resulting amount of C₂ in formed EPR range is between 39 - 74 mol%, preferably 53 - 65 mol%. If hydrogen is to be used in this stage, the molar C₂/H₂ ratio should be between 0,01 to 0,1, preferably 0,03 to 0,06 and most preferably 0,05.

In the second gas phase reactor, the second gas phase polymerisation step is carried out by adding propylene and ethylene monomers where the resulting amount of C₂ in formed EPR ranges between 77 - 99,9mol%, preferably 84 - 96 mol%. If hydrogen is to be used in this stage, the molar C₂/H₂ ratio should be between 0,3 to 0,7, preferably 0,4 to 0,6 and most preferably 0,5.

The inventors found out, that carrying out the GPR polymerisations in reversed order as explained before, the same results for the scratch resistance (SR) properties can be obtained. This proves the inventive concept of the invention that it is decisive for obtaining the desired SR characteristics, to prepare the rTPO with bimodal rubber on differing stages of the polymerisation process.

The slurry phase polymerisation may be carried out at temperatures of lower than 75°C, preferably 62 - 70°C and pressures varying between 30-60 bar, preferably 30-50 bar. The polymerisation is preferably carried out in such conditions that 20-90 wt %, preferably 40-80 wt % from the polymer is polymerised in the slurry reactor or reactors.

The gas phase polymerisation step is carried out by transferring the reaction mixture from the slurry phase via a flashing unit for removing unreacted monomers and H₂, preferably at pressures higher than 10 bars. The reaction temperature used will generally be in the range 60 to 115°C., preferably 70 to 90°C. The reactor pressure will be higher than 5 bars, and preferably be in the range 8 to 16 bar, and the residence time will generally be 0.1 to 0,5 hours.

Polymerisation may be achieved using any standard olefin polymerisation catalyst and these are well known to the person skilled in the art. Preferred catalyst systems comprise an ordinary stereospecific Ziegler-Natta catalyst, metallocene catalysts and other organometallic or coordination catalysts. A particularly preferred catalyst system is a high yield Ziegler-Natta catalyst having a catalyst component, a cocatalyst component, optionally an external donor. The catalyst system may thus contain a titanium compound and an electron-donor compound supported on an activated magnesium dichloride, a trialkylaluminium compound as activator and an electron donor compound.

A further preferred catalyst system is a metallocene catalyst having a bridged structure giving high stereoselectivity and which as an active complex is impregnated on a carrier.

Suitable catalyst systems are described in for example, FI Patent No. 88047, EP 491566, EP 586390 and WO98/12234.

The amount of matrix component in the heterophasic copolymers of the invention is between 20 to 90%, preferably 60 to 90% and most preferably 65 to 70% by weight of the heterophasic polymer. The amount of elastomeric copolymer prepared in the ethylene poor GPR polymerisation step may be in the range of 10 to 30%, preferably 15 to 25% and most preferably 18 to 22% by weight of the heterophasic polymer. The amount of elastomeric copolymer prepared in the ethylene rich GPR polymerisation step may be in the range of 5 to 20%, preferably 10 to 15% and most preferably 12 to 15% by weight of the heterophasic polymer. The elastomer components may comprise 95-5 wt %, preferably 95-20 wt % of crystalline phase and 5-95 wt %, preferably 5-80 wt % amorphous phase.

The xylene soluble fraction (XS) of the heterophasic copolymer is preferably in the range 3 to 35%, most preferably 6 to 20% by weight of the matrix component.

The propylene polymer matrix may also comprise any suitable ratio of monomers of propylene, ethylene and optionally other α-olefin which results in an amorphous or semicrystalline/amorphous elastomeric copolymer, if desired. Preferably, the elastomeric component comprises a copolymer of ethylene and propylene only.

The polymer composition may be compounded with a mineral material to further enhance mechanical properties. Suitable minerals for use in the polyolefin alloy of the invention are finely divided minerals which might have been surface treated, e.g. silanized with one or more of the aminosilanes traditionally used for surface treatment of talc. Particularly suitable minerals for use in the alloy are wollastonite, kaolin, mica, calcium-carbonate and talc, particularly talc. Preferably, the mineral has preferably a mean particle size D50 in the range of 0.5 to 10 µm, more preferably 1-6 µm.

The inventive polymer composition may further contain additives and fillers as usually used in the state of art and exemplified in the "Plastics Additives Handbook", Hanser Verlag Munich 2001.

The inventive polymer composition may further contain a slip agent which may contribute to the scratch resistance properties. Such slip agent may be selected from fatty acid amides, e.g. erucamide, oleamide, and high molecular weight polysiloxanes.

The targeted converting technique, but not limited to, is injection moulding.

The compounded polymer composition prepared according to the inventive process can be used to replace ABS OR ABS/PC-made parts for electrical appliances, where scratch resistance is an important property, car interiors and exteriors, in particular dashboards, door claddings, consoles, bumpers, where improved SR properties are needed.

The invention is therefore also directed to those parts prepared by using the inventive composition.

### EXAMPLES

A combination of a slurry loop and 2 gas phase reactors were used for producing polypropylene copolymers according to the invention.

The reactor product in powder shape has in itself a very good scratch resistance and can be used as such in applications where the mechanical properties are good enough. For many applications in the automotive and appliance area the stiffness requirement is higher, and therefore a mineral reinforcement is necessary. To reach a good distribution of the mineral in the PP a compounding step is needed. In this development the following additive package was used in the compounding step.
75,9% reactor product
0,1% CaSt
0,2% Irganox B225
0,3% GMS
0,5% Erucamide
3,0% dark grey colour MB
20% Talcum Luzenac A20 (D50 20µm)

The compounding extruder used was a Prism TSE 24 HC, twin screw extruder, (screw diameter, D=24mm, total length=40D). A drawing of the extruder can be seen

The polymer powder together with the additives was added through the main feeder and the 20% Talcum through the side feeder. The temperature setting in zone 1-10 and the die was the following.

20, 200, 205, 210, 215, 215, 215, 215, 215, 210 and 210°C, which is a standard setting for compounding of PP.

For mechanical testing in examples 1-5 we have used injection moulded test bars, 80x10x4 mm and 60x60x3 mm. These test bars was produced on a Battenfeld 460 injection moulding machine, using standard temperature setting for PP.

Grained test plaques for scratch testing was made by injection moulding in a pre-grained mould with grains defined from GM called N111 (fine grain) and N127 (coarse grain). In addition a non-grained plaque was moulded for investigation of scratch depths.

The following analytical techniques were used in testing the polymers synthesised:
Melt flow rates (MFR) were measured under a load of 2.16 kg and at 230°C. according to ISO 1133.
Tensile strength (tensile stress at yield) was measured according to ISO 572-2 (cross head speed=50 mm/min).
Tensile modulus was measured according to ISO 572-2 (cross head speed=1 mm/min).
Flexural modulus was measured according to ISO 178.
Charpy, notched impact strength was measured according to ISO 179/1eA.
Vicat hardness was measured according to IS0306.
Fogging was measured according to DIN 75 201 B.
Carbon emissions was measured according to VDA277.

The scratch resistance was measured as explained below in more detail.

### Scratch Resistance Test Method

As there is no uniform definition for scratch resistance, the inventors have searched for a uniformly applicable test method. Basically, a scratch is understood as a lasting deformation or wear of the surface of a material due to short term mechanical strain. Said scratch which is mainly depending on filler type and amount, surface texture, shape and force of indentor, surface hardness of polymer and smoothness of scratch bottom has to be examined re visibility (light scattering), area / size of deformation and depth. The inventors found out that using a specific testing device reliable and comparable results could be obtained.

Said test set up is based on a method from GM (GME 60280) equipped with a scratching device (Cross Hatch Cutter Model 420p, manufactured by Erichsen) for cutting a cross hatch (40x40 mm, distance between each grid line 2mm) onto the specimen surface with different grains (N 111----> fine grain/ N127----> coarse grain). The instrument is equipped with a steel ball tip (0,5 - 3,0mm). The cutting force is adjustable between 1 and 50N while the cutting speed is given by a simple mechanism (normally 1000 mm/min). Standard conditions used in the examples are based on 5N force, 1,0 mm tip and a cutting speed of 1000mm/min.

With regard to a more objective scratch assessment, this method was selected instead of the conventional Erichsen tester (model 318) because of excluding the influence of the person performing the test.

Scratch evaluation was carried out by measuring the Delta L (dL) value by means of a spectralphotometer. This measurement corresponds to the difference in brightness of the treated resp. untreated polymer surface.
DeltaL >4: strong visibility of scratch
DeltaL <1: below this value significant lower visibility of scratch.

In addition a Scanning electron microscope and a laser confocal microscope was used to examine the topography and depth of the scratches.

### Examples 1-5

PP-matrix polymerisations were carried out in a loop reactor. The matrix was produced in liquid propylene at 70°C. in the first stage. After the desired polymerisation time, the pressure was reduced slowly to 10,5 bar and polymerisation was continued in the gas phase reactor after flashing the matrix product. In the gas phase, semicrystalline and amorphous copolymers were polymerised at 80°C.

The catalyst used was prepared according to standard procedures, the activity of which was 40 kg PP/g cat h. The polymerisation conditions and the polymer properties are presented in Table 1.

### Test results

| Run | IV split GPR1/GPR2 (GPR2=tot ) | C2 mol% GPR1/GPR2 (GPR2=tot) | Total Rubber (%) | MFR 230°C Pellets | Flexural modulus Mpa | Charpy (+)23°C KJ/m2 | Charpy (-)20°C KJ/m2 |
|---|---|---|---|---|---|---|---|
| 1 | 1,63/3,22 | 12,2/21,1 | 28,9 | 9,8 | 798 | 60,2 (PB) | 8,7 (B) |
| 2 | 1,61/2,43 | 10,9/28,7 | 29,1 | 13,1 | 873 | 12,1 (B) | 6,0 (B) |
| 3 | 4,00/3,45 | 14,4/33,0 | 29,5 | 10,6 | 925 | 10,6 (B) | 5,6 (B) |
| 4 | 4,24/2,34 | 25,2/30,1 | 29,0 | 11,9 | 828 | 13,2 (B) | 6,1 (B) |
| 5 | 2,31/2,63 | 11,9/23,0 | 26,5 | 13,2 | 900 | 12,2 (B) | 6,2 (B) |

The compounds of Runs 1 to 5 were compounded with 20% talc (Luzenac A-20) and Erucamide and the scratch resistance of test samples has been examined.

| Run | SR, dL N111/N127 | Ash, % | MFR 230°C Pellets | Flexural modulus Mpa | Charpy (+)23°C KJ/m2 | Charpy (-)20°C KJ/m2 |
|---|---|---|---|---|---|---|
| 1-1 | 1,9/3,2 | 20,4 | 10,4 | 1786 | 27,2 (PB) | 4,2 (B) |
| 1-2 | 3,3/4,5 | 20,3 | 9,6 | 1832 | 25,9 (PB) | 3,9 (B) |
| 2 | 1,9/2,9 | 19,3 | 11,8 | 1915 | 6,7 (B) | 2,4 (B) |
| 3 | 0,8/1,3 | 20 | 11,2 | 1911 | 9,1 (HB) | 2,3 (B) |
| 4 | 1,8/2,9 | 20,9 | 10,9 | 1852 | 7,5 (HB) | 2,4 (B) |
| 5 | 0,94/1,7 | 20,3 | 12 | 1870 | 10,0 (HB) | 2,6 (B). |

| | | | | | | |
|---|---|---|---|---|---|---|
| *) 1-2 is based on the same PP batch but with out erucamide which proves an extra gain in SR by adding the slip agent in a PP with non optimised EPR can be obtained. | | | | | | |

As it can be seen form the above results of the studies of the inventors best scratch resistance performance can be obtained when combining a high C2 content with a low molecular weight IV. Comparing runs 3 and 5 lead to the results that the order of the differing GPR polymerisation reactions is not decisive for obtaining the desired SR properties as long as the molar ratios for C2 are maintained for the respective step.

If a higher impact strength will be needed the total rubber content should be increased and GPR split should be differentiated to yield more C3 rich rubber. For a higher stiffness, finer talc, a strong nucleating agent might be used and the C2 content should be maximized.

By using the inventive process, polymer materials can be obtained which have a dL value of preferably less than 4, and further improved values, when a slip agent, in particular erucamide is used, of even more preferably less than 2 dL < 2.

## Claims

1. A process for the preparation of a polypropylene polymer composition with bimodal rubber, said process comprising the steps of:
i) feeding propylene to at least one slurry reactor and producing a polypropylene polymer matrix in the presence of a polymerisation catalyst in said at least one slurry reactor,
ii) transferring the slurry reactor product into a gas phase reactor (GPR),
iii) feeding a first mixture of ethylene and propylene to said first gas phase reactor and producing a first ethylene/propylene-copolymer in the polymer matrix in the presence of a polymerisation catalyst in said first gas phase reactor,
iv) transferring the first gas phase reactor product into a second gas phase reactor, and
v) feeding a second mixture of ethylene and propylene to said second gas phase reactor and producing a second ethylene/propylene-copolymer in the polymer matrix in the presence of a polymerisation catalyst in said second gas phase reactor,
vi) recovering the polymer product produced in step v) for further processing,
said first and second ethylene/propylene mixtures having different composition ratios and wherein said first ethylene/propylene-copolymer has a higher molecular weight than said second ethylene/propylene-copolymer, and whereby the polymerisation conditions in the gas phase reactors are such that in one GPR reactor A, the gas phase polymerisation step is carried out by adding propylene and ethylene monomers where the resulting amount of C₂ in the EPR formed in gas phase reactor A is in the range from 39 - 74 mol% and that in the other GPR reactor B, the gas phase polymerisation step is carried out by adding propylene and ethylene monomers where the resulting amount of C₂ in the EPR formed in gas phase reactor B is in the range from 77 - 99,9 mol %.

2. Process according to claim 1 wherein the composition ratios of said first and second ethylene/propylene mixtures are adjusted so that in the first gas phase reactor, a propylene rich EPR rubber is produced in the propylene polymer matrix, and in the second gas phase reactor, a ethylene rich EPR rubber is produced in the propylene polymer matrix.

3. Process according to any of claims 1 or 2, whereby the polymerisation conditions in the gas phase reactors are such that in one GPR reactor A, the gas phase polymerisation step is carried out by adding propylene and ethylene monomers where the resulting amount of C₂ in the EPR formed in gas phase reactor A is in the range from 53 - 65 mol% and that in the other GPR reactor B, the gas phase polymerisation step is carried out by adding propylene and ethylene monomers where the resulting amount of C₂ in the EPR formed in gas phase reactor B is in the range from 84 - 96 mol%.

4. Process according to claim 3, whereby in GPR reactor A, the molar H₂/C₂ ratio is in the range between 0,01 to 0,1, preferably 0,03 to 0,06 and most preferably 0,05 and in GPR reactor B, the molar H₂/C₂ ratio is in the range between 0,3 to 0,7, preferably 0,4 to 0,6 and most preferably 0,5.

5. Process according to any of the preceding claims, whereby the polymer products are flashed before transferring them to the next polymerisation step.

6. Process according to any of the preceding claims, whereby the polymer product obtained in step vi is further treated for compounding with additives and/or fillers.

7. Polymer product obtainable according to the process of any of the preceding claims.

8. Polymer product according to claim 7, further comprising at least one additive or filler selected from minerals, slip agent and processing agents.

9. Polymer product obtainable according to the process of any of the preceding claims and having a dL value of less than 4, preferably less than 2.

10. Use of the polymer of claims 7 to 9 for manufacturing moulded articles.

11. Moulded article, comprising the polymer of any of claims 7 to 9.

## Patentansprüche

1. Ein Verfahren für die Herstellung einer Polypropylenpolymer-Zusammensetzung mit bimodalem Gummi, wobei das Verfahren die Schritte umfasst:
i) Einspeisen von Propylen in mindestens einen Aufschlämmungsreaktor und Herstellen einer Polypropylenpoylmer-Matrix in der Gegenwart eines Polymerisationskatalysators in dem mindestens einen Aufschlämmungsreaktor,
ii) Transferieren des Produkts des Aufschlämmungsreaktors in einen Gasphasenreaktor (GPR),
iii) Einspeisen einer ersten Mischung von Ethylen und Propylen in den ersten Gasphasenreaktor und Herstellen eines ersten Ethylen/Propylen-Copolymers in der Polymer-Matrix in der Gegenwart eines Polymerisationskatalysators in dem ersten Gasphasenreaktor,
iv) Transferieren des Produkts des ersten Gasphasenreaktors in einen zweiten Gasphasenreaktor, und
v) Einspeisen einer zweiten Mischung von Ethylen und Propylen in den zweiten Gasphasenreaktor und Herstellen eines zweiten Ethylen/Propylen-Copolymers in der Polymer-Matrix in der Gegenwart eines Polymerisationskatalysators in dem zweiten Gasphasenreaktor,
vi) Rückgewinnen des Polymerprodukts, das in Schritt v) hergestellt wurde, für das weitere Verarbeiten,
wobei die ersten und zweiten Ethylen/Propylen-Mischungen unterschiedliche Zusammensetzungsverhältnisse haben und wobei das erste Ethylen/Propylen-Copolymer ein höheres Molekulargewicht hat als das zweite Ethylen/Propylen-Copolymer, und wobei die Polymerisationsbedingungen in den Gasphasenreaktoren so sind, dass in einem GPR-Reaktor A der Gasphasen-Polymerisationsschritt durch Hinzufügen von Propylen- und Ethylenmonomeren durchgeführt wird, wobei die resultierende Menge an C₂ in dem EPR, das in Gasphasenreaktor A gebildet wird, im Bereich von 39 - 74 mol% ist und dass in dem anderen GPR-Reaktor B der Gasphasen-Polymerisationsschritt durch hinzufügen von Propylen- und Ethylen-Monomeren durchgeführt wird, wobei die resultierende Menge an C₂ in dem EPR, das in dem Gasphasen-Reaktor B gebildet wird, im Bereich von 77 - 99.9 mol% ist.

2. Verfahren gemäß Anspruch 1, wobei die Zusammensetzungverhältnisse der ersten und zweiten Ethylen/Propylen-Mischungen angepasst werden, so dass in dem ersten Gasphasenreaktor ein Propylen-reiches EPR Gummi in der Propylenpolymer-Matrix hergestellt wird, und in dem zweiten Gasphasenreaktor ein Ethylen-reiches EPR Gummi in der Propylenpolymer-Matrix hergestellt wird.

3. Verfahren gemäß einem der Ansprüche 1 oder 2, wobei die Polymerisationsbedingungen in den Gasphasenreaktoren so sind, dass in einem GPR-Reaktor A der Gasphasen-Polymerisationsschritt durch Hinzufügen von Propylen- und Ethylenmonomeren durchgeführt wird, wobei die resultierende Menge an C₂ in dem EPR, das in Gasphasenreaktor A gebildet wird, im Bereich von 53 - 65 mol% ist und dass in dem anderen GPR-Reaktor B der Gasphasen-Polymerisationsschritt durch hinzufügen von Propylen- und Ethylen-Monomeren durchgeführt wird, wobei die resultierende Menge an C₂ in dem EPR, das in dem Gasphasen-Reaktor B gebildet wird, im Bereich von 84 - 96 mol% ist.

4. Verfahren gemäß Anspruch 3, wobei in dem GPR-Reaktor A das molare H₂/C₂-Verhältnis im Bereich zwischen 0.01 bis 0.1, bevorzugt 0.03 bis 0.06 und am bevorzugtesten 0.05 ist und in dem GPR-Reaktor B das molare H₂/C₂-Verhältnis im Bereich zwischen 0.3 bis 0.7, bevorzugt 0.4 bis 0.6 und am bevorzugtesten 0.5 ist.

5. Verfahren gemäß einem der vorangegangenen Ansprüche, wobei die Polymerprodukte geflasht werden, bevor sie zu dem nächsten Polymerisationsschritt transferiert werden.

6. Verfahren gemäß einem der vorangegangenen Ansprüche, wobei das Polymerprodukt, das in Schritt vi erhalten wird, weiter behandelt wird, um mit Additiven und/oder Füllstoffen vermischt zu werden.

7. Polymerprodukt, das gemäß dem Verfahren nach einem der vorangegangenen Ansprüche erhältlich ist.

8. Polymerprodukt gemäß Anspruch 7, das weiter mindestens ein Additiv oder Füllstoff umfasst, die aus Mineralien, Gleitmitteln und Verarbeitungsmitteln ausgewählt werden.

9. Polymerprodukt, das gemäß dem Verfahren nach einem der vorangegangenen Ansprüche erhältlich ist, und das einen dL Wert von weniger als 4, bevorzugt weniger als 2 hat.

10. Verwendung des Polymers nach den Ansprüchen 7 bis 9 zur Herstellung von Formteilen.

11. Formteil, das das Polymer nach einem der Ansprüche 7 bis 9 umfasst.

## Revendications

1. Procédé de préparation d'une composition de polymère de polypropylène avec du caoutchouc bimodal, ledit procédé comprenant les étapes de :
i) alimentation de propylène à au moins un réacteur à combustible en suspension et production d'une matrice de polymère de polypropylène en présence d'un catalyseur de polymérisation dans ledit au moins un réacteur à combustible en suspension,
ii) transfert du produit du réacteur à combustible en suspension dans un réacteur en phase gazeuse (GPR),
iii) alimentation d'un premier mélange d'éthylène et de propylène audit premier réacteur en phase gazeuse et production d'un premier copolymère éthylène/propylène dans la matrice polymère en présence d'un catalyseur de polymérisation dans ledit premier réacteur en phase gazeuse,
iv) transfert du produit du premier réacteur en phase gazeuse dans un deuxième réacteur en phase gazeuse, et
v) alimentation d'un deuxième mélange d'éthylène et de propylène audit deuxième réacteur en phase gazeuse et production d'un deuxième copolymère éthylène/propylène dans la matrice polymère en présence d'un catalyseur de polymérisation dans ledit deuxième réacteur en phase gazeuse,
vi) récupération du produit polymère produit dans l'étape v) pour un autre traitement,
lesdits premier et deuxième mélanges d'éthylène/propylène ayant différents rapports de composition et où ledit premier copolymère éthylène/propylène possède un poids moléculaire plus élevé que ledit deuxième copolymère éthylène/propylène, et grâce à quoi les conditions de polymérisation dans les réacteurs en phase gazeuse sont telles que dans un réacteur GPR A, l'étape de polymérisation en phase gazeuse est réalisée par l'addition de monomères de propylène et d'éthylène quand la quantité résultante de C₂ dans le EPR formé dans le réacteur en phase gazeuse A est dans la gamme de 39-74 % en mole et telles que dans l'autre réacteur GPR B, l'étape de polymérisation en phase gazeuse est réalisée par l'addition de monomères de propylène et d'éthylène quand la quantité résultante de C₂ dans le EPR formé dans le réacteur en phase gazeuse B est dans la gamme de 77- 99,9 % en mole.

2. Procédé selon la revendication 1, où les rapports de composition desdits premier et deuxième mélanges d'éthylène/propylène sont ajustés de sorte que dans le premier réacteur en phase gazeuse, un caoutchouc EPR riche en propylène est produit dans la matrice de polymère de propylène, et dans le deuxième réacteur en phase gazeuse, un caoutchouc EPR riche en éthylène est produit dans la matrice de polymère de propylène.

3. Procédé selon l'une quelconque des revendications 1 ou 2, grâce auquel les conditions de polymérisation dans les réacteurs en phase gazeuse sont telles que dans un réacteur GPR A, l'étape de polymérisation en phase gazeuse est réalisée par l'addition de monomères de propylène et d'éthylène quand la quantité résultante de C₂ dans le EPR formé dans le réacteur en phase gazeuse A est dans la gamme de 53 - 65 % en mole, et telles que dans l'autre réacteur GPR B l'étape de polymérisation en phase gazeuse est réalisée par l'addition de monomères de propylène et d'éthylène quand la quantité résultante de C₂ dans le EPR formé dans le réacteur en phase gazeuse B est dans la gamme de 84 - 96 % en mole.

4. Procédé selon la revendication 3, grâce auquel dans le réacteur GPR A, le rapport molaire H₂/C₂ est dans la gamme comprise entre 0,01 à 0,1, de préférence 0,03 à 0,06 et de manière la plus préférée de 0,05 et dans le réacteur GPR B, le rapport molaire H₂/C₂ est dans la gamme comprise entre 0,3 à 0,7, de préférence 0,4 à 0,6 et de manière la plus préférée 0,5.

5. Procédé selon l'une quelconque des revendications précédentes, grâce auquel les produits polymères sont flashés avant de les transférer à l'étape de polymérisation suivante.

6. Procédé selon l'une quelconque des revendications précédentes, grâce auquel le produit polymère obtenu dans l'étape vi est ensuite traité pour le mélanger avec des additifs et/ou des charges.

7. Produit polymère qu'on peut obtenir selon le procédé selon l'une quelconque des revendications précédentes.

8. Produit polymère selon la revendication 7, comprenant en outre au moins un additif ou une charge choisie parmi des minéraux, des agents de glissance et des agents de traitement.

9. Produit polymère qu'on peut obtenir selon le procédé selon l'une quelconque des revendications précédentes et ayant une valeur dL inférieure à 4, de préférence inférieure à 2.

10. Utilisation du polymère selon les revendications 7 à 9 pour la fabrication d'articles moulés.

11. Article moulé, comprenant le polymère selon l'une quelconque des revendications 7 à 9.
